# FASCICULE DE BREVET EUROPEEN

(11) **EP 3 999 322 B1**
(45) Date de publication et mention de la délivrance du brevet: **14.05.2025**
(21) Numéro de dépôt: 20747105.3
(22) Date de dépôt: 01.07.2020
(51) Int. Cl.: B29C 65/02, B29C 65/78

(54) **DISPOSITIF D'ENTRAINEMENT AVEC FRICTION RÉDUITE**
ANTRIEBSVORRICHTUNG MIT REDUZIERTER REIBUNG
REDUCED-FRICTION DRIVE DEVICE

(30) Priorité: 19.07.2019 EP 19187382
(43) Date de publication de la demande: 25.05.2022
(73) Titulaire: Aisapack Holding SA, 1896 Vouvry (CH)
(72) Inventeur: BUSSIEN, Gaël, 1897 Le Bouveret (CH)
(74) Mandataire: Grosfillier, Philippe
(86) Numéro de dépôt international: PCT/IB2020/056217
(87) Numéro de publication internationale: WO 2021/014241

(56) Documents cités:
- EP-A1- 0 498 764
- EP-B1- 0 498 764
- WO-A1-2012/126656
- DE-U1- 202011 050 417
- FR-A- 1 418 537

## Description

### Domaine de l'invention et problème à résoudre

Les dispositifs de soudage en continu d'une feuille pour former un tube comportent au moins les étapes suivantes :
- Positionnement de la feuille autour d'une tige de soudage,
- Mise en position les extrémités à souder de la feuille,
- Chauffage de la zone à souder,
- Mise en pression de la zone à souder,
- Refroidissement de la zone soudée.

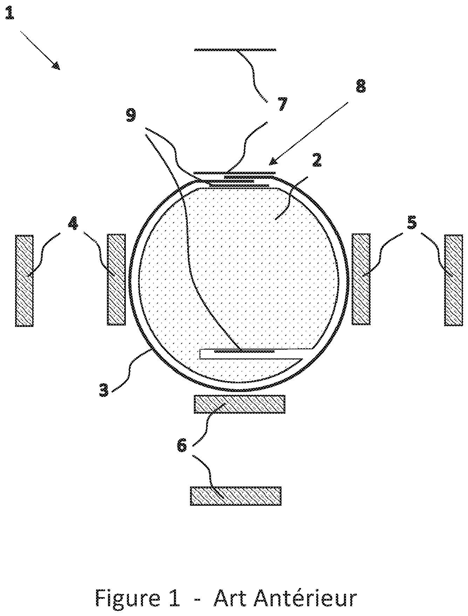

L'entrainement de la feuille 3 autour de la tige de soudage 2 requiert un dispositif d'entrainement de la feuille. Des courroies d'entrainement 4 - 6 disposées autour de la tige de soudage 2 sont couramment utilisée pour entrainer la feuille 3. Un exemple de dispositif 1 de l'art antérieur est illustré figure 1.

L'inconvénient des dispositifs existants est de générer des frottements de la face interne de la feuille sur la tige de soudage. La face externe de la feuille qui formera la face externe du tube en formation est entrainée par contact idéalement sans glissement entre les courroies d'entrainement 4 à 6 et la face externe de la feuille tandis que la face interne de la feuille 3 glisse sur la tige de soudage 2. A faible vitesse de déplacement de la feuille, les frottements générés sont faibles et n'altèrent pas la face interne du tube. A vitesse de production élevée, il peut se créer une abrasion de la face interne du tube générant des poussières qui s'accumulent dans le tube formé et posent des problèmes de qualité. Dans d'autres cas, les frottements créent une usure prématurée de la tige 2 du fait d'agents glissants ajoutés dans la feuille 3. Dans d'autres cas, le problème apparait même aux faibles vitesses de production du fait de l'utilisation de nouvelles matières dans la feuille ou du fait de l'usage de matière recyclée. Il est donc d'un grand intérêt de créer un dispositif de soudage en continu dans lequel les frottements sont réduits entre la feuille 3 et la tige 2.

Les disposifs de soudage des documents FR 1 418 537 A, EP 0 498 764 A1, DE 20 2011 050417 U1 ou WO 2012/126656 A1 permettent de réduire le frottement entre la feuille et la tige grâce à la formation d'un coussin d'air.

### Sommaire de l'invention

Un but de l'invention est donc d'améliorer les dispositifs, machines et procédés de confection de tubes d'emballage.

Un autre but est de surmonter les problèmes rencontrés dans les machines connues, comme décrit ci-dessus.

L'invention consiste en un dispositif de soudage suivant la revendication 1.

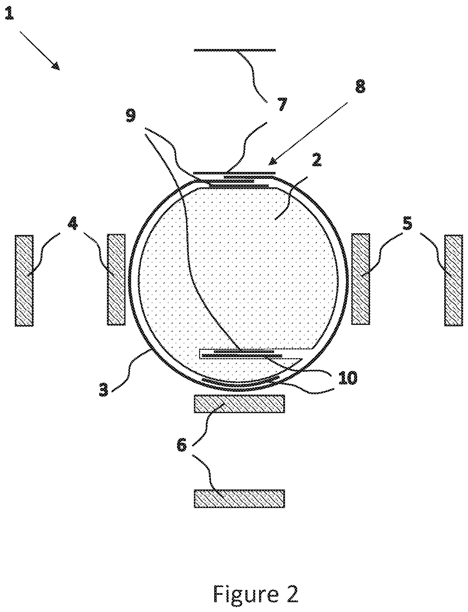

L'invention est illustrée par les figures 2 à 6. La figure 1 montre un exemple de l'état de la technique.

Dans des modes d'exécution la courroie antifriction est de préférence en regard d'au moins un des moyens d'entrainement de la feuille le long de la tige.

Dans des modes d'exécution les moyens diminuant le frottement peuvent comprendre plusieurs courroies antifriction, par exemple trois.

Dans des modes d'exécution la feuille peut se déplacer à la même vitesse que la ou les courroie(s) antifriction.

Dans des modes d'exécution la ou les courroie(s) antifriction peut(peuvent) être entrainée(s) par la feuille, ou par un moteur ou par une courroie de soudage.

Dans des modes d'exécution le coefficient de friction statique C_{f} entre courroie antifriction et la feuille est de préférence supérieur au coefficient de friction statique Ct entre la courroie antifriction et la tige.

Dans des modes d'exécution le rapport C_{f}/Cₜ est supérieur à 1 et de préférence supérieur à 1,5. D'autre valeurs sont bien entendu possibles.

Dans des modes d'exécution pour obtenir un rapport Cf/Ct favorable, on peut adapter les propriétés de surface de la tige en ajustant sa rugosité et/ou un traitement de surface de la tige ou/et en appliquant un revêtement de fine épaisseur, par exemple un revêtement de type Résiflon sur la surface de la tige.

Dans des modes d'exécution la ou les courroie(s) antifriction a(ont) de préférence une épaisseur inférieure à 3mm. D'autres valeurs sont bien entendu possibles dans le cadre de la présente invention.

Dans des modes d'exécution la largeur de la ou des courroie(s) antifriction peut varier en fonction du diamètre du tube.

Dans des modes d'exécution la largeur de la ou des courroie(s) antifriction peut être supérieure à 3mm. D'autres dimensions sont bien entendu possible, inférieures ou supérieures.

Dans des modes d'exécution la ou les courroie(s) antifriction peut(peuvent) être en matière(s) synthétique(s), mono couche ou multicouche, ou métallique(s). Des combinaisons de matières sont également possibles.

Dans des modes d'exécution un insert qui emprisonne la (les) courroie(s) antifriction peut être ajouté à l'intérieur de la tige et servir conjointement de pièce de friction avec la (les) courroie (s).

Dans des modes d'exécution la section du tube peut être circulaire et/ou ovale et/ou rectangulaire et/ou carrée. Elle peut aussi passer d'une forme à une autre forme long de son axe longitudinal.

### Description des figures

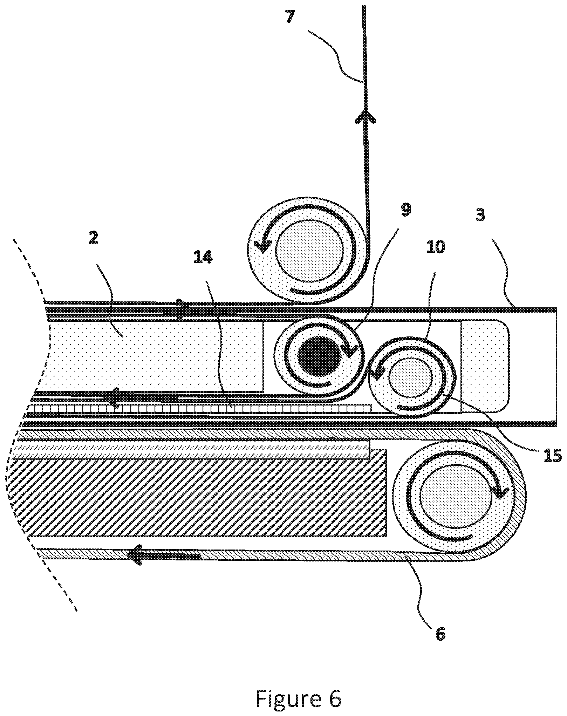

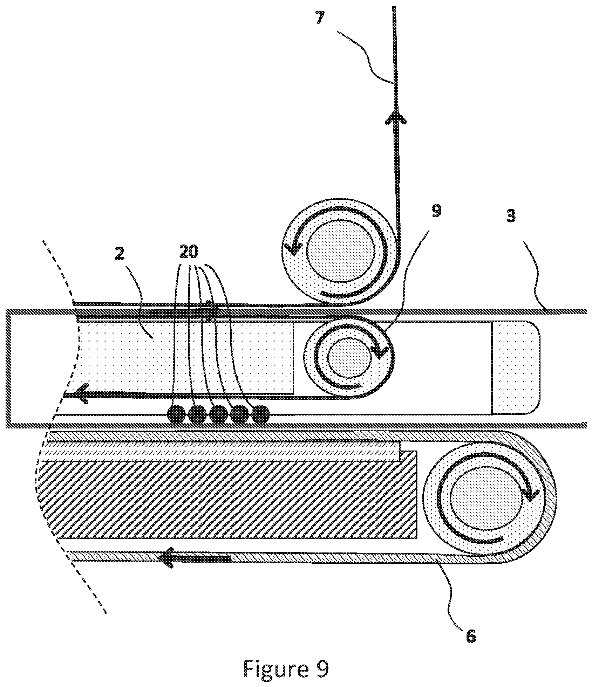

Les figures 1 à 6 représentent des vues en coupe d'un dispositif de soudage en continu pour la confection de tubes d'emballage soudés à partir d'une feuille mono ou multicouches. La direction d'observation correspond à l'axe de défilement de la feuille qui est enroulée autour d'une tige de soudage pour les figures 1 à 5, 7, 8 et perpendiculaire à cet axe pour les figures 6 et 9.

Seuls les éléments pertinents pour l'exposé de l'invention sont représentés, en particulier les éléments du dispositif qui sont utilisés pour l'entrainement de la feuille. Les éléments de chauffage, refroidissement, mise en pression de la soudure ne sont pas représentés et sont par exemple illustrés dans la publication WO9404343. Les figures de la publication WO9404343A1 illustrent une autre configuration de l'art antérieur proche de celle représentée à la figure 1 de la présente demande.
La figure 1 illustre un dispositif d'entrainement de l'art antérieur. L'entrainement de la feuille est réalisé par les courroies d'entrainement 4, 5 et 6 et au niveau de la soudure par les courroies 7 et 9. La feuille 3 frotte sur la tige 2 au regard des courroies d'entrainement 4, 5 et 6.
La figure 2 illustre un premier mode d'exécution de dispositif d'entrainement à faible frottement selon l'invention. Ce dispositif comprend une courroie antifriction 10 au regard de la courroie d'entrainement 6. Le frottement de la feuille sur la tige 2 au regard de la courroie 6 est supprimé.
La figure 3 illustre un second mode d'exécution de dispositif d'entrainement à faible frottement selon l'invention. Ce dispositif comprend des courroies antifriction 10, 11 et 12 respectivement au regard des courroies d'entrainement 6, 5 et 4.
La figure 4 illustre un troisième mode d'exécution de l'invention où la courroie d'entrainement 13 est une courroie enveloppante.
La figure 5 illustre un autre exemple d'intégration de la courroie antifriction dans la tige de soudage.
La figure 6 illustre une vue en coupe selon l'axe longitudinal du mode d'exécution de la figure 5.
La figure 7 illustre un autre mode d'exécution de l'invention dans lequel le tube a une section carrée.
La figure 8 illustre un dispositif de soudage qui ne forme pas partie de l'invention.
La figure 9 illustre une vue en coupe selon l'axe longitudinal du dispositif de la figure 8.

### Références numériques:

1: vue en coupe du dispositif d'entrainement
2: tige de soudage
3: feuille
4: courroie d'entrainement latérale
5: courroie d'entrainement latérale
6: courroie d'entrainement inférieur
7: courroie de soudage externe
8: zone de soudage
9: courroie de soudage interne
10: courroie anti friction
11: courroie anti friction
12: courroie anti friction
13: courroie enveloppante
14: insert
15: poulie de renvoi
20: rouleau(x)

### Description détaillée de l'invention

Les dispositifs de soudage correspondant à l'état de la technique sont composés d'une tige de soudage 2 le long de laquelle sont agencés les différents éléments nécessaires à l'opération proprement dite de soudage comme par exemple des éléments chauffants, des éléments de mise en pression, des éléments de refroidissement, des éléments de reformage. Ces éléments généralement disposés au-dessus de la tige de soudage 2 pour des raisons de praticité, exercent une pression verticale qui contribue à générer un fort frottement de la feuille 3 sur la face inférieure de la tige de soudage 2 lors du formage du tube.

Pour supprimer le fort frottement de la feuille de soudage sur la face inférieure de la tige de soudage, on utilise selon le principe de l'invention des moyens tels que décrits dans la revendication 1.

Un exemple de l'invention selon un mode d'exécution est illustré figure 2 et il comprend l'ajout d'une courroie antifriction 10 qui se déplace à la même vitesse que la feuille 3.

Selon ce mode d'exécution de l'invention, cette courroie antifriction 10 est positionnée en regard de la courroie d'entrainement inférieure 6 qui est en contact avec la face externe de la feuille 3 (voir le principe illustré en figure 6).

La courroie antifriction 10 est en contact avec la face interne de la feuille 3 et permet d'éviter le frottement de la face interne de la feuille 3 contre la tige 2. Préférablement, la courroie antifriction 10 se déplace à la même vitesse que la feuille 3.

Selon un premier mode d'exécution, la courroie antifriction 10 est entrainée par la feuille 3. Selon un second mode de d'exécution, la courroie 10 est entrainée par un moteur. Selon un troisième mode d'exécution, la courroie 10 est entrainée par la courroie de soudage 9, par exemple par frottement contre celle-ci. D'autres moyens équivalents sont bien entendu possibles et dans le cas où un dispositif comprend au moins deux courroies, chaque courroie peut faire appel à un moyen d'entrainement différent, ou non. Ces moyens d'entrainement peuvent bien entendu être employés dans tous les modes d'exécution de l'invention.

Selon un mode d'exécution de l'invention, le coefficient de friction statique C_{f} entre la courroie antifriction 10 et la feuille 3 est supérieur au coefficient de friction statique Ct entre la courroie antifriction 10 et la tige 2. Selon l'invention le rapport C_{f}/Cₜ est supérieur à 1 et de préférence supérieur à 1,5.

Pour obtenir un rapport Cf/Ct favorable, une première solution consiste à adapter les propriétés de surface de la tige en ajustant sa rugosité et le traitement de surface ou/et en appliquant un revêtement de fine épaisseur. Par exemple un revêtement de type Résiflon peut être utilisé.

La courroie antifriction 10 est choisie préférablement de faible épaisseur. Son épaisseur est inférieure à 3mm et de préférence inférieure 1mm. Préférablement l'épaisseur de la courroie varie faiblement.

La largeur de la courroie antifriction 10 peut varier en fonction du diamètre du tube. De préférence, la largeur de la courroie 10 est supérieure à 3mm et de préférence supérieure à 6mm.

Préférablement la courroie antifriction est en matière synthétique, mono couche ou multicouche. La courroie peut également être métallique, de préférence d'épaisseur inférieure à 0,25mm. D'autres matières équivalentes sont possibles.

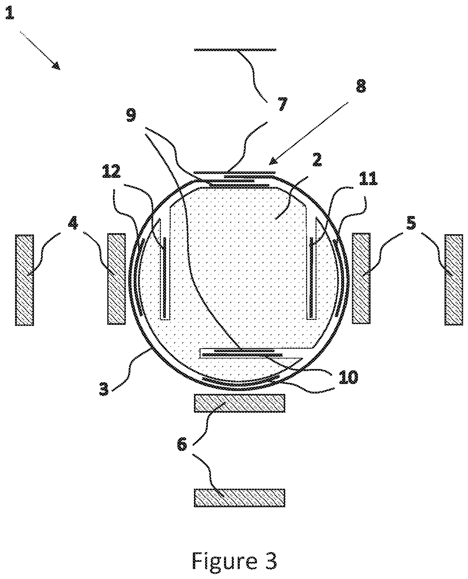

Un autre mode de réalisation de l'invention est illustré dans la figure 3. Une première courroie antifriction 10 est positionnée en regard de la courroie d'entrainement inférieure qui 6 comme dans le mode de la figure 2. Une deuxième courroie antifriction 12 est positionnée en regard de la courroie d'entrainement latérale 4. Une troisième courroie antifriction 11 est positionnée en regard de la courroie d'entrainement latérale 5. Avec ce dispositif d'entrainement à trois courroies antifriction 10-12, les frottements de la feuille 3 sur la tige sont presque totalement supprimés. Les caractéristiques des courroies 11 et 12 sont par exemple les mêmes que celles de la courroie 10 décrite ci-dessus. Selon d'autres modes, les caractéristiques des courroies peuvent être différentes en fonction des circonstances par exemple. Le nombre de courroies n'est bien sûr pas limité aux exemples des figures 2 et 3. Au moins une courroie antifriction est ajoutée comme décrit ci-dessus et de préférence en regard de la courroie d'entrainement 6. Chaque courroie antifriction peut être en une pièce, ou comprendre deux courroies (ou plus) en parallèle en fonction des circonstances.

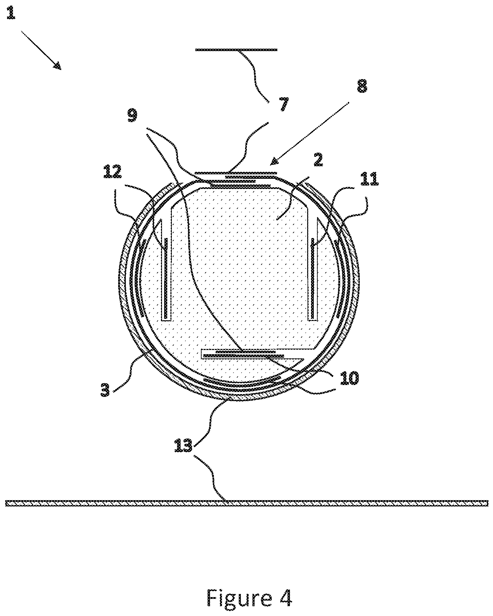

Un autre mode de réalisation de l'invention est illustré dans la figure 4. Dans ce mode c'est une courroie enveloppante 13 qui entraine la feuille 3 au lieu des courroies 4-6. Les courroies antifriction 10, 11, 12 permettent de réduire fortement le frottement de la feuille 3 sur la tige 2. Ce mode utilisant cette courroie d'entrainement enveloppante 13 peut être utilisé avec des réalisations comprenant une seule courroie antifriction (comme dans la figure 2) ou plusieurs (deux, trois etc.).

Le choix des solutions de logement des courroies antifriction dans la tige de soudage 2 dépend principalement (mais non exclusivement) du diamètre des tiges de soudage et des éléments déjà intégrés à ladite tige comme par exemple des circuits de refroidissement, des inducteurs électromagnétiques ou des rouleaux de pression. Une première solution illustrée dans les figures 2, 3 et 4 est par exemple de réaliser des nervures pour positionner le retour des courroies antifriction.

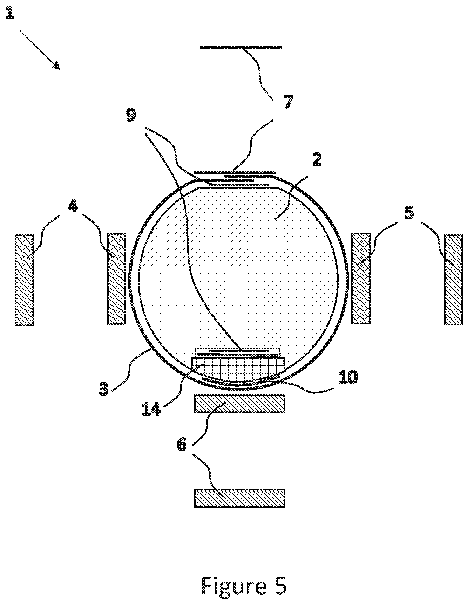

Un autre exemple de réalisation illustré figures 5 et 6 est de former une rainure et de positionner un insert 14 qui emprisonne la courroie antifriction 10 à l'intérieur de la tige 2 et sert conjointement de pièce de friction avec la courroie 10. Ces réalisations de logement peuvent être combinées sur une même tige 2 lorsqu'elle comprend au moins deux courroies antifriction. Le principe de construction illustré en figure 6 est bien sûr applicable à tous les modes d'exécution de l'invention (par exemple ceux des figures 2 à 4) sans utiliser d'insert 14. Dans cette figure on voit également une poulie de renvoi 15 de la courroie 10 qui permet de réaliser le cheminement en boucle fermée de la courroie 10.

L'invention ne se limite pas aux exemples et modes d'exécution précédents. On peut augmenter le nombre de courroies au-delà de trois par exemple pour mieux suivre la face externe de la tige 2. Ou alors on peut augmenter la taille de la courroie antifriction 10 pour qu'elle couvre une surface plus importante de la tige 2.

Dans un autre mode d'exécution, les trois courroies 10-12 de la figure 3 ou 4 peuvent être rassemblées en une courroie unique de taille équivalente ou les courroies individuelles 10-12 séparées en plusieurs courroies de plus petite taille.

D'autres moyens équivalents aux courroies décrites, par exemple un traitement de surface particulier de la tige 2 permettent de diminuer le coefficient de frottement. On peut combiner ces moyens: traitement de surface et courroies antifriction.

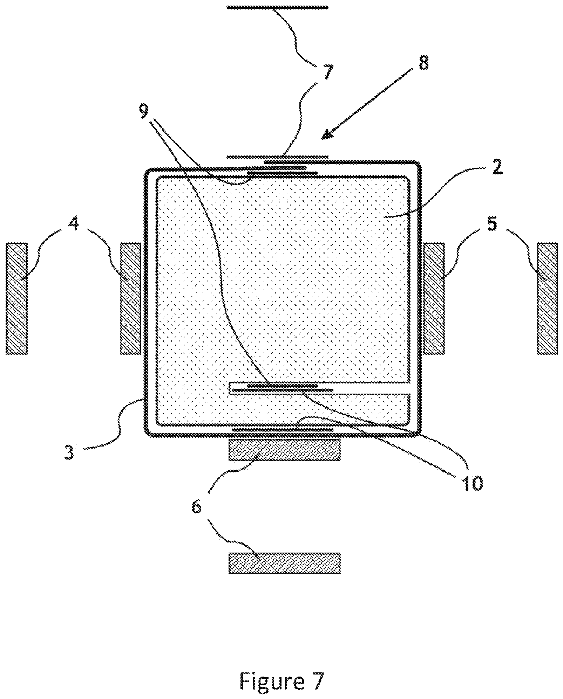

Dans des modes d'exécution, la section de la tige 2 peut avoir une autre forme que circulaire comme illustré dans les figures 2 à 5: elle peut par exemple être ovale, carrée, rectangulaire, pentagonale, hexagonale etc. De telles formes peuvent notamment faciliter le passage de la (ou des) courroies antifriction. Un exemple est illustré en figure 7 qui montre une tige 2 de section carrée dans un mode d'exécution général correspondant à celui de la figure 2. Cette forme (ou une autre) peut s'appliquer à tous les modes d'exécution de l'invention, notamment à ceux des figures 3 à 6, et à ceux décrits ci-dessus. La forme/section peut être constante sur toute la longueur du tube ou elle peut varier, par exemple pour passer d'une forme à une autre forme.

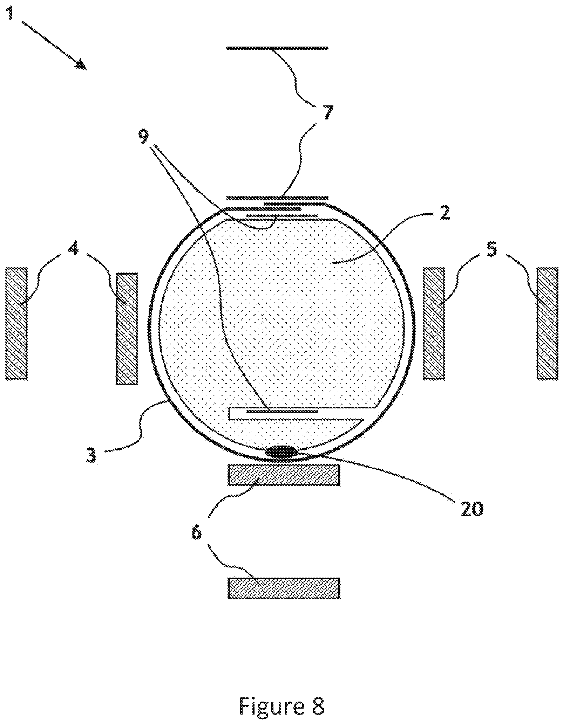

D'autres dispositifs qui ne forment pas partie de l'invention utilisent des rouleaux 20 (c'est-à-dire des éléments rotatifs) à la place d'une courroie antifriction 10 telle que décrite. Ils peuvent être utilisés en combinaison avec une courroie antifriction 10. Un exemple avec de tels rouleaux 20 est illustré en figures 8 et 9. Comme illustré en figure 8, la forme du et des rouleaux suit de préférence celle de la tige 2. Le nombre des rouleaux peut être adapté en fonction des circonstances et n'est pas limité à celui illustré en figure 9. De plus, le ou les rouleau(x) 20 peut (peuvent) être monté(s) en rotation libre (par exemple sur un axe) ou être entraînés en rotation par un moteur de façon direction ou indirecte. Si plusieurs rouleaux 20 sont utilisés, l'entraînement par moteur peut se faire un seul rouleau 20 ou plusieurs. Les rouleaux 20 peuvent être en toutes matières appropriées (métal, synthétique ou mélanges par exemple).

L'utilisation des rouleaux 20 est possible dans tous les modes d'exécution (par exemple ceux illustrés dans les figures 2 à 7) et les rouleaux 20 peuvent être utilisés en combinaison avec d'autres moyens antifriction comme une ou plusieurs courroies telle(s) que décrite(s) dans la présente demande.

Tous les modes décrits et envisagés dans le cadre de la présente demande peuvent bien entendu se combiner entre eux. Les circonstances peuvent privilégier un mode d'exécution ou un autre, et les moyens utilisés parmi les combinaisons possibles.

Les modes d'exécution décrits le sont à titre d'exemples illustratifs et ne doivent pas être considérés comme limitatifs. D'autres modes d'exécution peuvent faire appel à des moyens équivalents à ceux décrits par exemple. Les modes d'exécution peuvent également être combinés entre eux en fonction des circonstances, ou des moyens utilisés dans un mode peuvent être utilisés dans un autre mode.

## Revendications

1. Dispositif de soudage pour former un tube, par exemple un tube d'emballage, à partir d'une feuille (3), ledit dispositif comprenant au moins une tige de soudage (2), des moyens de soudage et de mise en pression de la zone soudée (7, 8, 9) et des moyens d'entrainement (4, 5, 6) de la feuille (3) le long de la tige (2), ledit dispositif comprenant en outre des moyens (10, 11,12, 14; 20) destinés à diminuer le frottement entre la tige de soudage (2) et la feuille (3), **caractérisé en ce que** lesdits moyens destinés à diminuer le frottement comprennent au moins une courroie antifriction (10).

2. Dispositif selon la revendication 1, dans lequel lesdits moyens diminuant le frottement comprennent trois courroies antifriction (10, 11, 12).

3. Dispositif selon la revendication 1 ou 2, dans lequel la ou les courroie(s) antifriction (10, 11, 12) est (sont) en regard d'au moins un des moyens d'entrainement (4, 5, 6) de la feuille le long de la tige (2).

4. Dispositif selon l'une des revendications 1 à 3 dans lequel la feuille (3) se déplace à la même vitesse que la ou les courroie(s) antifriction (10, 11, 12).

5. Dispositif selon l'une des revendications 1 à 4, dans lequel la ou les courroie(s) antifriction (10, 11, 12) est(sont) entrainée(s) par la feuille (3), ou par un moteur (20) ou par la courroie de soudage (9).

6. Dispositif selon l'une des revendications 1 à 5, dans lequel le coefficient de friction statique C_{f} entre courroie antifriction (10, 11, 12) et la feuille (3) est supérieur au coefficient de friction statique Ct entre la courroie antifriction (10, 11, 12) et la tige (2).

7. Dispositif selon la revendication 6, dans lequel le rapport C_{f}/Cₜ est supérieur à 1 et de préférence supérieur à 1,5.

8. Dispositif selon l'une des revendications 1 à 6, dans lequel pour obtenir un rapport Cf/Ct favorable, on adapte les propriétés de surface de la tige (2) en ajustant sa rugosité et/ou un traitement de surface de la tige (2) ou/et en appliquant un revêtement de fine épaisseur, par exemple un revêtement de type Résiflon sur la surface de la tige (2).

9. Dispositif selon l'une des revendications 1 à 8, dans lequel la ou les courroie(s) antifriction (10, 11, 12) a(ont) une épaisseur inférieure à 3mm.

10. Dispositif selon l'une des revendications 1 à 9, dans lequel la largeur de la ou des courroie(s) antifriction (10, 11, 12) varie en fonction du diamètre du tube.

11. Dispositif selon l'une des revendications 1 à 10, dans lequel la largeur de la ou des courroie(s) antifriction (10, 11, 12) est supérieure à 3mm.

12. Dispositif selon l'une des revendications 1 à 11, dans lequel la ou les courroie(s) antifriction (10, 11, 12) est(sont) en matière synthétique, mono couche ou multicouche, ou la (les) courroie(s) est (sont) métallique(s).

13. Dispositif selon l'une des revendications 1 à 12, dans lequel un insert (14) qui emprisonne la (les) courroie(s) antifriction (10, 11, 12) à l'intérieur de la tige et sert conjointement de pièce de friction avec la (les) courroie (s) (10).

14. Dispositif selon l'une des revendications précédentes, dans lequel la section du tube (3) est circulaire et/ou ovale et/ou rectangulaire et/ou carrée, ou ladite section passe d'une forme à une autre forme long de son axe longitudinal.

## Patentansprüche

1. Schweißvorrichtung zum Formen eines Rohrs, z. B. eines Verpackungsrohrs, aus einem Blatt (3), wobei die Vorrichtung mindestens eine Schweißstange (2), Mittel zum Schweißen und zum Druckbeaufschlagen des geschweißten Bereichs (7, 8, 9) und Mittel zum Mitnehmen (4, 5, 6) des Blatts (3) entlang der Stange (2) aufweist, wobei die Vorrichtung ferner Mittel (10, 11, 12, 14; 20) zum Verringern der Reibung zwischen der Schweißstange (2) und dem Blatt (3) aufweist, **dadurch gekennzeichnet, dass** die Mittel zum Verringern der Reibung mindestens einen reibungsmindernden Riemen (10) aufweisen.

2. Vorrichtung nach Anspruch 1, wobei die Mittel zum Verringern der Reibung drei reibungsmindernde Riemen (10, 11, 12) aufweisen.

3. Vorrichtung nach Anspruch 1 oder 2, wobei der oder die reibungsmindernde(n) Riemen (10, 11, 12) mindestens einem der Mittel (4, 5, 6) zum Mitnehmen des Blatts entlang der Stange (2) gegenüberliegt (gegenüberliegen).

4. Vorrichtung nach einem der Ansprüche 1 bis 3, wobei sich das Blatt (3) mit der gleichen Geschwindigkeit wie der oder die reibungsmindernde(n) Riemen (10, 11, 12) bewegt.

5. Vorrichtung nach einem der Ansprüche 1 bis 4, wobei der oder die reibungsmindernde(n) Riemen (10, 11, 12) von dem Blatt (3) oder von einem Motor (20) oder von dem Schweißriemen (9) angetrieben wird (werden).

6. Vorrichtung nach einem der Ansprüche 1 bis 5, wobei der statische Reibungskoeffizient C_{f} zwischen dem reibungsmindernden Riemen (10, 11, 12) und dem Blatt (3) größer ist als der statische Reibungskoeffizient Cₜ zwischen dem reibungsmindernden Riemen (10, 11, 12) und der Stange (2).

7. Vorrichtung nach Anspruch 6, wobei das Verhältnis C_{f}/Cₜ größer als 1 und vorzugsweise größer als 1,5 ist.

8. Vorrichtung nach einem der Ansprüche 1 bis 6, wobei zur Erzielung eines günstigen C_{f}/Cₜ-Verhältnisses die Oberflächeneigenschaften der Stange (2) durch Einstellen ihrer Rauheit und/oder einer Oberflächenbehandlung der Stange (2) oder/und durch Aufbringen einer Beschichtung mit dünner Dicke, z. B. einer Beschichtung vom Typ Resiflon, auf die Oberfläche der Stange (2) angepasst werden.

9. Vorrichtung nach einem der Ansprüche 1 bis 8, wobei der oder die reibungsmindernde(n) Riemen (10, 11, 12) eine Dicke von weniger als 3 mm hat (haben).

10. Vorrichtung nach einem der Ansprüche 1 bis 9, wobei die Breite des oder der reibungsmindernden Riemen(s) (10, 11, 12) mit dem Durchmesser des Rohrs variiert.

11. Vorrichtung nach einem der Ansprüche 1 bis 10, wobei die Breite des oder der reibungsmindernden Riemen(s) (10, 11, 12) größer als 3 mm ist.

12. Vorrichtung nach einem der Ansprüche 1 bis 11, wobei der (die) reibungsmindernde(n) Riemen (10, 11, 12) aus Kunststoff, einlagig oder mehrlagig, besteht (bestehen) oder der (die) Riemen metallisch ist (sind).

13. Vorrichtung nach einem der Ansprüche 1 bis 12, wobei ein Einsatz (14), der den (die) reibungsmindernde(n) Riemen (10, 11, 12) innerhalb der Stange einschließt, gemeinsam mit dem (den) Riemen (10) als Reibungsteil dient.

14. Vorrichtung nach einem der vorhergehenden Ansprüche, wobei der Querschnitt des Rohrs (3) kreisförmig und/oder oval und/oder rechteckig und/oder quadratisch ist, oder der Querschnitt entlang seiner Längsachse von einer Form in eine andere Form übergeht.

## Claims

1. Welding device for forming a tube, for example a packaging tube, from a sheet (3), said device comprising at least one welding rod (2), means for welding and pressurizing the welded zone (7, 8, 9), and means (4, 5, 6) for driving the sheet (3) along the rod (2), said device further comprising means (10, 11, 12, 14; 20) intended to reduce the friction between the welding rod (2) and the sheet (3), **characterized in that** said means intended to reduce the friction comprise at least one antifriction belt (10).

2. Device according to Claim 1, wherein said friction-reducing means comprise three antifriction belts (10, 11, 12).

3. Device according to Claim 1 or 2, wherein the antifriction belt(s) (10, 11, 12) is (are) opposite at least one of the means (4, 5, 6) for driving the sheet along the rod (2).

4. Device according to one of Claims 1 to 3, wherein the sheet (3) moves at the same speed as the antifriction belt(s) (10, 11, 12).

5. Device according to one of Claims 1 to 4, wherein the antifriction belt(s) (10, 11, 12) is (are) driven by the sheet (3), or by a motor (20) or by the welding belt (9).

6. Device according to one of Claims 1 to 5, wherein the coefficient of static friction C_{f} between the antifriction belt (10, 11, 12) and the sheet (3) is greater than the coefficient of static friction Cₜ between the antifriction belt (10, 11, 12) and the rod (2).

7. Device according to Claim 6, wherein the ratio C_{f}/Cₜ is greater than 1 and preferably greater than 1.5.

8. Device according to one of Claims 1 to 6, wherein, in order to obtain a favourable ratio Cf/Ct, the surface properties of the rod (2) are adapted by adjusting its roughness and/or a surface treatment of the rod (2) or/and by applying a coating of small thickness, for example a coating of Résiflon type, to the surface of the rod (2).

9. Device according to one of Claims 1 to 8, wherein the antifriction belt(s) (10, 11, 12) has (have) a thickness of less than 3 mm.

10. Device according to one of Claims 1 to 9, wherein the width of the antifriction belt(s) (10, 11, 12) varies as a function of the diameter of the tube.

11. Device according to one of Claims 1 to 10, wherein the width of the antifriction belt(s) (10, 11, 12) is greater than 3 mm.

12. Device according to one of Claims 1 to 11, wherein the antifriction belt(s) (10, 11, 12) is (are) made of single-layer or multilayer synthetic material, or the belt(s) is (are) metallic.

13. Device according to one of Claims 1 to 12, wherein an insert (14) that traps the antifriction belt(s) (10, 11, 12) inside the rod and jointly serves as a friction piece with the belt(s) (10).

14. Device according to one of the preceding claims, wherein the section of the tube (3) is circular and/or oval and/or rectangular and/or square, or said section passes from one shape to another shape along its longitudinal axis.
